Europäisches Patentamt

European Patent Office

Office européen des brevets

(11) Veröffentlichungsnummer: **0 167 027**
**A1**

(12) **EUROPÄISCHE PATENTANMELDUNG**

(21) Anmeldenummer: 85107158.9

(22) Anmeldetag: 11.06.85

(51) Int. Cl.⁴: **G 01 P 3/486**

(30) Priorität: 23.06.84 DE 8419186 U

(43) Veröffentlichungstag der Anmeldung:
08.01.86 Patentblatt 86/2

(84) Benannte Vertragsstaaten:
AT BE CH DE FR GB IT LI LU NL SE

(71) Anmelder: Joh. Vaillant Gmbh u. Co
Berghauser Strasse 40 Postfach 10 10 20
D-5630 Remscheid 1(DE)

(72) Erfinder: Mannss, Helmut
Paulstrasse 33 b
D-5630 Remscheid(DE)

(74) Vertreter: Heim, Johann-Ludwig
c/o Joh. Vaillant GmbH u. Co Postfach 10 10 20
Berghauser Strasse 40
D-5630 Remscheid 1(DE)

(54) Drehzahlgeber.

(57) Drehzahlgeber für ein Abgasgebläse eines Umlaufwasserheizers mit optischem Geber und lichtelektrischem Empfänger, wobei ein Lichtleiter-Faserbündel (6) vorgesehen ist, dessen Abschlußfläche des einen Endes (5) parallel zu einer Reflexmarke (4) am Gebläserad (1) angeordnet ist und dessen anderes Ende (8) dem Geber (10) sowie dem Empfänger zugeordnet ist, wobei dieses Ende des Bündels geteilt ist und die Teile durch eine Trennwand (14) lichtdicht voneinander getrennt sind.

Drehzahlgeber

Die vorliegende Erfindung bezieht sich auf einen Drehzahlgeber gemäß dem Oberbegriff des Hauptanspruchs.

Im Zuge der Anhebung der Wirkungsgrade brennstoffbeheizter Wärmequellen, seien es Umlauf-Wasserheizer, Durchlauf-Wasserheizer oder Kessel, beschreitet man zunehmend den Weg, die Abgase auf erheblich tiefere Temperaturen, als es früher üblich war, herunterzukühlen und den dann fehlenden thermischen Auftrieb im Schornstein durch Unterstützung durch ein Abgasgebläse auszugleichen, um eine einwandfreie Abförderung der Abgase zu erreichen.

Es hat sich aber gezeigt, daß es dann notwendig ist, die Drehzahl eines solchen Gebläses zu regeln, um den Förderstrom des Gebläses der Leistung und damit dem Abgasdurchsatz der brennstoffbeheizten Wärmequelle anzupassen. Zu einer Drehzahlregelung gehört aber ein Ist-Wert-Geber, damit der Ist-Wert mit dem Soll-Wert zur Bildung der Regelabweichung verglichen werden kann, worauf in der Regel als Stellgröße die elektrische Leistungszufuhr zum elektrischen Antriebsmotor des Gebläses verstellt wird.

Die Erfindung befaßt sich mit einem solchen Drehzahlgeber. Hierbei tritt als besondere Schwierigkeit auf, daß das Abgasgebläse in einem Raum auf erhöhtem Temperaturniveau liegt, so daß in diesem Raum nicht unmittelbar mit Halbleitern sowie elektronischen Bauelementen gearbeitet werden kann.

...

Der Erfindung liegt mithin die Aufgabe zugrunde, ein 0167027
Drehzahlgeber unter Verwendung elektrischer Bauelemente
anzugeben, der für die herrschenden hohen Temperaturen
in der Umgebung des Abgasgebläses geeignet ist.

Die Lösung der Aufgabe liegt in den kennzeichnenden
Merkmalen des Hauptanspruches.

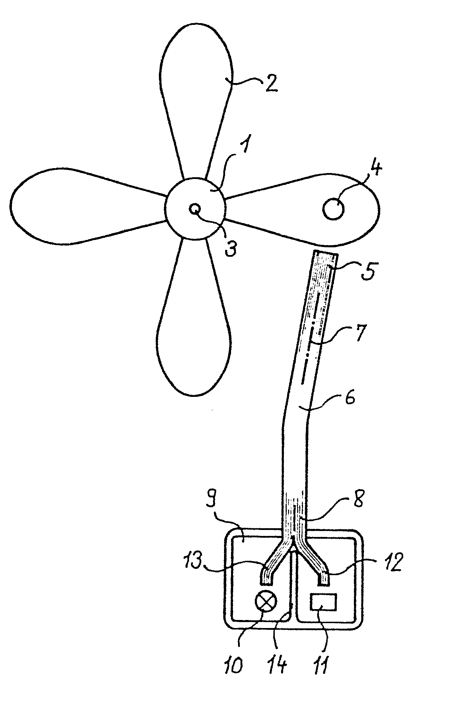

Weitere Ausgestaltungen und besonders vorteilhafte Weiterbildungen der Erfindung sind Gegenstand des Unteranspruchs
bzw. gehen aus der nachfolgenden Beschreibung hervor, die
ein Ausführungsbeispiel der Erfindung anhand der Figur
der Zeichnung näher erläutert.

Die Zeichnung zeigt eine Prinzipdarstellung eines Abgasgebläses (wie es zum Beispiel Teil eines Umlauf-Wasserheizers
ist). Das Abgasgebläse besitzt einen Axialpropeller 1,
der Flügel 2 und eine Antriebswelle 3 aufweist, die von
einem nicht weiter dargestellten Elektromotor angetrieben
wird. Einer (ggf. mehrere) der Flügel ist mit einer
Reflexmarke 4 versehen, in deren Nähe ein Ende 5 eines
Glasfaserbündels 6 angeordnet ist. Bei diesem Faserbündel
muß es sich nicht notwendigerweise um Glas handeln,
auch ein anderer lichtleitender Stoff käme in Frage,
gegebenenfalls sogar ein hoch hitzebeständiger Kunststoff.
Das Ende 5 des Faserbündels ist exakt senkrecht zur Längsachse 7 des Faserbündels geschliffen, die Schleiffläche
steht exakt parallel zu der/den Reflexmarke/n 4. Das
Lichtleiter-Faserbündel kann beliebig lang sein, so daß
das dem Ende 5 abgewandte andere Ende 8 aus der Zone
hoher Temperaturen des Propellers 1 herausgeführt werden
kann. Zweckmäßigerweise ist dieses Ende dem ohnehin
vorhandenen Schalt- und Regelelementkasten der brennstoffbeheizten Wärmequelle zugeordnet, es kann auch in
einem gesonderten Gehäuse 9 münden, in dem eine
LED - und ein lichtelektrischer Geber - gegebenenfalls
auch eine LED - und ein lichtelektrischer Empfänger 11,
zum Beispiel in Gestalt eines Fototransistors oder
einer Fotozelle, angeordnet sind.

Wesentlich ist, daß das Faserbündel 6 am Ende 8 in zwei Teile 12 und 13 aufgespalten ist, die durch eine Zwischenwand 14 lichtdicht voneinander getrennt sind. Es kommt nicht darauf an, daß die beiden Teile 12 und 13 die gleiche Zahl von Fasern umfassen, es kommt auch nicht darauf an, daß die Fasern längs des Bündels orientiert sind. Insbesondere diese Anforderung verbilligt die Drehzahlgeber ganz entscheidend. Während das Teilbündel 12 dem Empfänger 11 zugeordnet ist, ist das Teil Bündel 13 dem Geber 10 zugeordnet. Der Drehzahlgeber arbeitet wie folgt:

Während des Betriebes des Abgasgebläses wird über den Geber 10 ein Dauerlichtstrom erzeugt, der über das Teilbündel 13 im Ende 5 zugeführt wird. Hier tritt Lichtstrom aus den einzelnen nicht gerichtet angeordneten Fasern aus, trifft bei jeder Umdrehung des Propellers 1 auf die Reflexmarken 4 und wird im gleichen Bündel in den Fasern des Teilbündels 12 zurückreflektiert zum Fototransistor 11, wo sich die Lichtimpulse in elektrische Impulse umwandeln lassen, die dann von einer bekannten elektronischen Schaltung in eine Impulsfolge oder in eine der Drehzahl proportionalen Spannung umgewandelt werden.

Joh. Vaillant GmbH u. Co

**0167027**

EP 1138

3. Juni 1985

- 1 -

Ansprüche

1.    Drehzahlgeber für ein Abgasgebläse einer brennstoffbeheizten Wärmequelle mit einem lichtelektrischen Empfänger und einem optischen
Geber, dadurch gekennzeichnet, daß ein Lichtleiter-Faserbündel (6) vorgesehen ist, dessen
Abschlußfläche des einen Endes (5) parallel
zu einer Reflexmarke (4) am Gebläserad (1)
angeordnet ist und dessen anderes Ende (8) dem
Geber (10) sowie Empfänger (11) zugeordnet ist,
wobei dieses Ende des Bündels geteilt ist und
die Teile durch eine Trennwand (14) lichtdicht
voneinander getrennt sind.

2.    Drehzahlgeber nach Anspruch eins, dadurch gekennzeichnet, daß das Ende (8) des Lichtleiter-
Faserbündels (6), der Geber (10) und der
Empfänger (11) als Baueinheit in einem Gehäuse (9) zusammengefaßt sind.

3.    Drehzahlgeber nach Anspruch eins oder zwei, d. h.,
daß einzelne Lichtleiter des Faserbündels nicht
orientiert sind.

4.    Drehzahlgeber nach einem der Ansprüche eins - drei,
d. h., daß die Aufteilung der einzelnen Fasern
auf die Teilbündel (12 und 13) ungleich ist.

0167027

Europäisches
Patentamt

**EUROPÄISCHER RECHERCHENBERICHT**

**0167027**
Nummer der Anmeldung

EP 85 10 7158

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | GB-A-2 054 138 (YAZAKI SOGYO KAB.) <br> * Seite 4, Zeilen 41-62; Figuren 2,5,8A-8C,9 * | 1-4 | G 01 P 3/486 |
| X | FR-A-2 113 895 (DUNLOP) <br> * Seite 3, Zeile 34 - Seite 4, Zeile 4; Figur 5 * | 1 | |
| A | US-A-4 424 792 (SHIMEK et al.) <br> * Spalte 3, Zeilen 18-37; Figur 1 * | 1 | |

RECHERCHIERTE
SACHGEBIETE (Int Cl 4)

G 01 P
G 01 D
F 23 L
F 24 H

Der vorliegende Recherchenbericht wurde für alle Patentansprüche erstellt

| Recherchenort | Abschlußdatum der Recherche | Prüfer |
|---|---|---|
| DEN HAAG | 20-09-1985 | HANSEN P. |